(19) **Europäisches Patentamt**

**European Patent Office**

**Office européen des brevets**

(11) **EP 0 993 571 B1**

(12) **FASCICULE DE BREVET EUROPEEN**

(45) Date de publication et mention de la délivrance du brevet:
**22.08.2001 Bulletin 2001/34**

(51) Int Cl.⁷: **F16K 1/226**

(21) Numéro de dépôt: **97932887.9**

(86) Numéro de dépôt international:
**PCT/FR97/01264**

(22) Date de dépôt: **10.07.1997**

(87) Numéro de publication internationale:
**WO 99/02901 (21.01.1999 Gazette 1999/03)**

(54) **ROBINET A PAPILLON EXCENTRE**

EXZENTRISCHE KLAPPE

OFFSET BUTTERFLY VALVE

(84) Etats contractants désignés:
**DE ES FR GB IT NL**

(43) Date de publication de la demande:
**19.04.2000 Bulletin 2000/16**

(73) Titulaire: **Mazot, Lucien**
**95770 Montreuil sur Epte (FR)**

(72) Inventeur: **Mazot, Lucien**
**95770 Montreuil sur Epte (FR)**

(56) Documents cités:
EP-A- 0 145 632     DE-B- 2 057 305
FR-A- 2 456 271     FR-A- 2 745 882

**Description**

La présente invention concerne d'une manière générale une vanne rotative de réglage dont l'ensemble obturateur-siège en acier sans joint asssure en position fermée une étanchéité parfaite du fluide entre l'amont et l'aval, cette invention s'applique également aux vannes papillon de réglage ou d'isolement, aux vannes à boule ainsi qu'aux vannes à clapet anti-retour.

L'état de la technique antérieure traditionnelle fait appel à trois techniques basiquement différentes pour assurer l'étanchéité entre l'amont et l'aval des vannes.

La première concerne les vannes à obturateurs du type papillon à simple ou à double excentration dont la surface périphérique portante d'étanchéité du papillon est circulaire à profil plat ou sphérique : cette surface portante s'appuie à la fermeture sur un siège pourvu d'un joint également parfaitement circulaire en forme d'anneau ou de bague, le siège comprenant le joint est fréquemment fixé sur le corps du robinet, le joint de siège qu'il soit métallique ou en matière plastique a obligatoirement une partie souple, il se déforme donc au moment de la fermeture pour absorber les interférences mécaniques et assurer l'étanchéité avec l'obturateur, sa déformation engendre des frottements entre la pièce mobile soit l'obturateur et la pièce fixe qui est le siège ou le joint de siège.

Cette technique présente deux inconvénients majeurs qui sont d'une part l'usure créée par le frottement obligeant le remplacement périodique des pièces, et d'autre part, les frottements et la déformation nécessaire du joint créant un couple de manoeuvre additionnel de l'organe moteur de la vanne.

Une deuxième technique antérieure peu industrialisée concerne un robinet papillon, le papillon qui est circulaire est équipé sur sa périphérie extérieure d'un joint élastique également circulaire ; à la fermeture le joint élastique du papillon prend appui sur une surface portante de siège située. dans le corps du robinet, cette surface correspondant à une section de cône oblique telle que toute section du cône par un plan normal à l'axe horizontal du robinet soit une section circulaire, le brevet hollandais n°3, 931, 955 décrit cette technologie.

Un des inconvénients majeurs de cette technique connue réside dans l'absence de possibilité d'auto-centrage mécanique entre un papillon pièce mâle, à joint de périphérie circulaire et une portée de siège pièce femelle, qui n'est circulaire que sur un plan et un seul ; toute position du papillon autre que la position verticale théorique absolument perpendiculaire à l'axe horizontal de la vanne correspond à la superposition du papillon circulaire sur une section portante elliptique ; cette technique rend donc indispensable l'utilisation d'un joint élastique périphérique au papillon devant absorber les interférences et jeux mécaniques pour assurer une étanchéité entre le papillon et son siège, de plus la flexion du joint élastique compromet une utilisation bi-directionnelle du fluide.

La présente invention résoud ces difficultés..

La troisième technique plus récente concerne les robinets à papillon ou à boule caractérisés en ce que la surface portante d'étanchéité de l'obturateur et du siège respectif sont coniques à périphérie elliptique, cette portée de géométrie identique pour le papillon et pour le siège est géométriquement définie par un tronc de cône dont l'axe de rotation est incliné et désaxé par rapport à l'axe de la tuyauterie. Cet axe de rotation est déporté à l'opposé du sommet du cône définissant la surface portante du siège. Ces obturateurs sont à double excentration de l'axe, l'excentration est parfois publicitairement dénommée triple lorsque la portée du siège est excentrée. Les excentrations géométriquement définies permettent par un effet de came d'obtenir à l'ouverture et à la fermeture des angles de dégagements supérieurs aux angles de frottement entre le papillon et le siège.

Les parties portantes d'étanchéité du papillon et du siège sont soit massifs en acier, soit du type à joint interchangeable ; ils sont alors composés d'une bague circulaire en acier dans lequel se loge le joint de siège de périphérie elliptique qui est du type métallo plastique c'est-à-dire composé d'un ensemble feuilleté de rondelles d'acier alternées avec des rondelles en matériau plastique ou élastique.

Cette technique présente l'inconvénient d'être coûteuse, en effet, la fabrication elliptique de la portée du joint de papillon, et du joint de siège ou de siège lorsqu'il est massif, exige des outillages non conventionnels donc onéreux du fait que l'usinage de la partie portante est elliptique ; les machines devant usiner ces pièces sont par nécessité spéciales c'est-à-dire peu répandues et donc coûteuses.

Par ailleurs, l'étanchéité entre le papillon et le siège n'est possible que si à la fermeture il y a superposition absolue de l'ellipse de l'obturateur sur l'ellipse du siège, le grand axe de l'ellipse de l'obturateur devant impérativement être superposé et confondu avec le grand axe de l'ellipse du siège, or ceci est difficilement réalisable en mécanique traditionnelle et fait donc appel à des tolérances d'usinage très serrées donc onéreuses ; le document EP-A-0145632 décrit cette technologie.

La présente invention résout les problèmes ci-dessus décrits, cette invention est caractérisée par la réalisation d'une vanne à obturateur rotatif.

Cette vanne est caractérisée en ce que les deux pièces mécaniques principales assurant l'étanchéité soit : l'obturateur, pièce mobile rotative et le siège, pièce fixe sur lequel l'obturateur prend appui à la fermeture, ont une ligne d'étanchéité circulaire, cette ligne est appelée cercle de base.

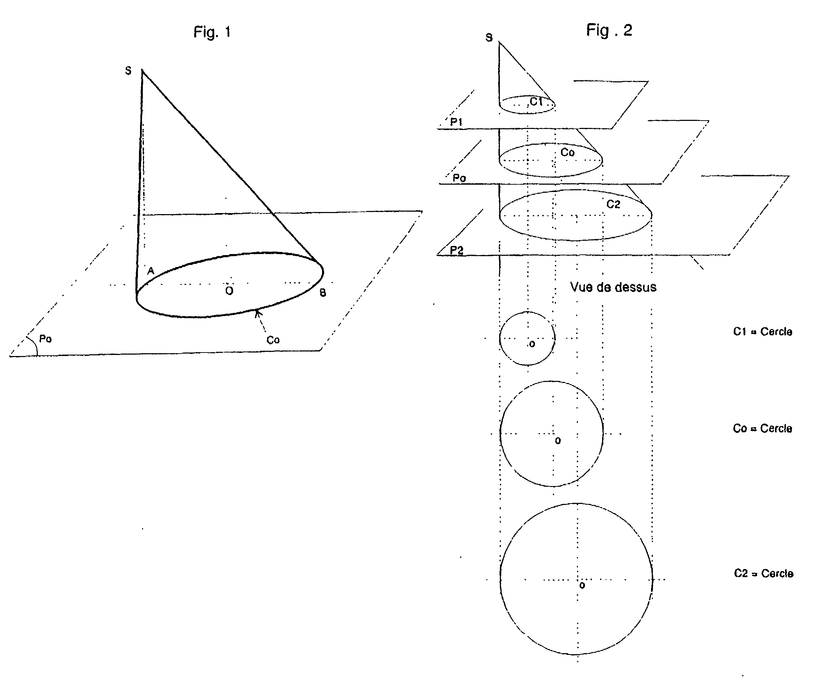

La partie portante d'étanchéité de l'obturateur et du siège est géométriquement définie par un tronc de cône droit circulaire, l'une des génératrices du cône est parallèle à l'axe du cercle de base et orthogonale au plan du dit cercle. FIG.1.

Dans le schéma de la FIG.1, O est le centre du cercle de base Co, S le sommet du cône, et la génératrice SA est perpendiculaire au plan du cercle Co.

La propriété caractéristique du cône est l'homothétie de centre S : toute section par un plan Pn parallèle au plan Po sera donc un <u>cercle</u> homothétique de Co dans le rapport défini par les distances respectives de Po et Pn au sommet S.

Ainsi dans le schéma FIG.2 les sections du cône par les plans P1 et P2 parallèles à Po sont des cercles C1 et C2.

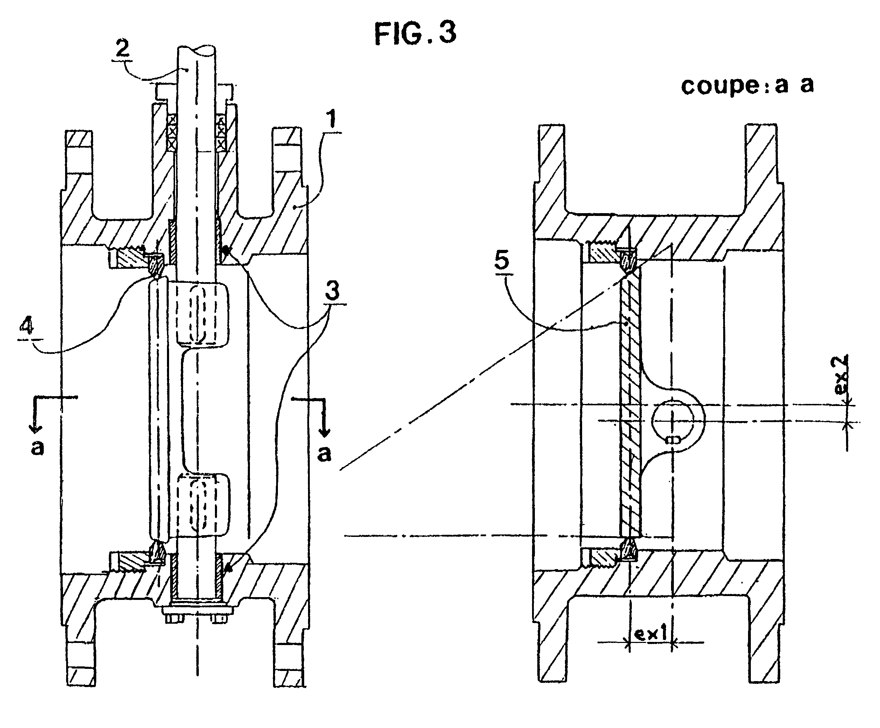

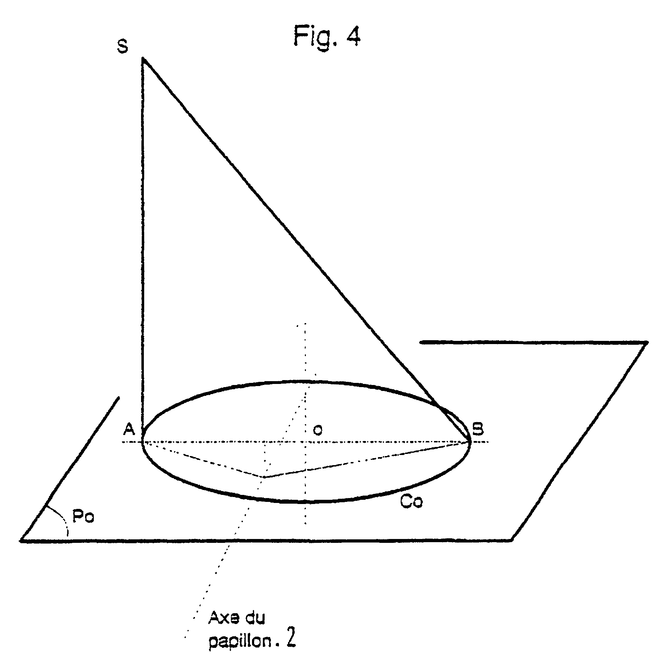

La vanne suivant la présente invention est FIG.3 constituée d'un corps de vanne 1, d'un axe rotatif 2, de deux paliers 3 et d'un siège conique circulaire fixe massif 4 et d'un obturateur circulaire 5 à double excentration ex1 et ex2 claveté sur l'axe rotatif 2, l'axe 2 étant parallèle FIG.4 au plan Po et orthogonal au diamètre AB du cercle de base, les surfaces portantes de contact du siège et de l'obturateur étant respectivement délimitées par deux plans parallèles.

La présente invention concerne les surfaces portantes d'étanchéité à la fermeture et non les autres caractéristiques mécaniques ou aérodynamiques de l'obturateur .

Les conditions de fonctionnement de l'ensemble sont les suivantes :

- en position fermée les surfaces portantes de contact métal-métal du siège et de l'obturateur sont confondues.
- l'ouverture et la fermeture de la vanne qui s'effectuent par rotation de l'axe 2 et de l'obturateur 5 s'effectuent sans aucun frottement car en tous points de la surface portante de contact, l'angle de dégagement défini comme l'angle formé par la normale au siège et la tangente à la trajectoire de l'obturateur, est supérieur de 90° à l'angle de coincement déterminé par la nature des aciers ou matériaux en présence.

En action d'ouverture ou de fermeture, lorsque l'obturateur s'éloigne ou approche le siège, l'autocentrage obturateur-siège s'effectue sans frottement suivant la présente invention car les surfaces de contact qui sont générées par des cercles n'exigent aucun alignement particulier de leurs axes.

Afin de déterminer la valeur des excentrations exi et ex2, la géométrie des surfaces portantes d'étanchéité du siège et du papillon, ainsi que la trajectoire relative des surfaces portantes respectives, ii est nécessaire de déterminer les cosinus directeurs de la normale et de la tangente définies ci-dessus.

La présente invention est caractérisée en ce que la géométrie des surfaces portantes doit répondre à la formulation mathématique formulée dans le présent texte descriptif.

Nous établirons les formulations mathématiques nécessaires dans le cas le plus général d'un cône à base circulaire, mais de sommet quelconque.

Soient :

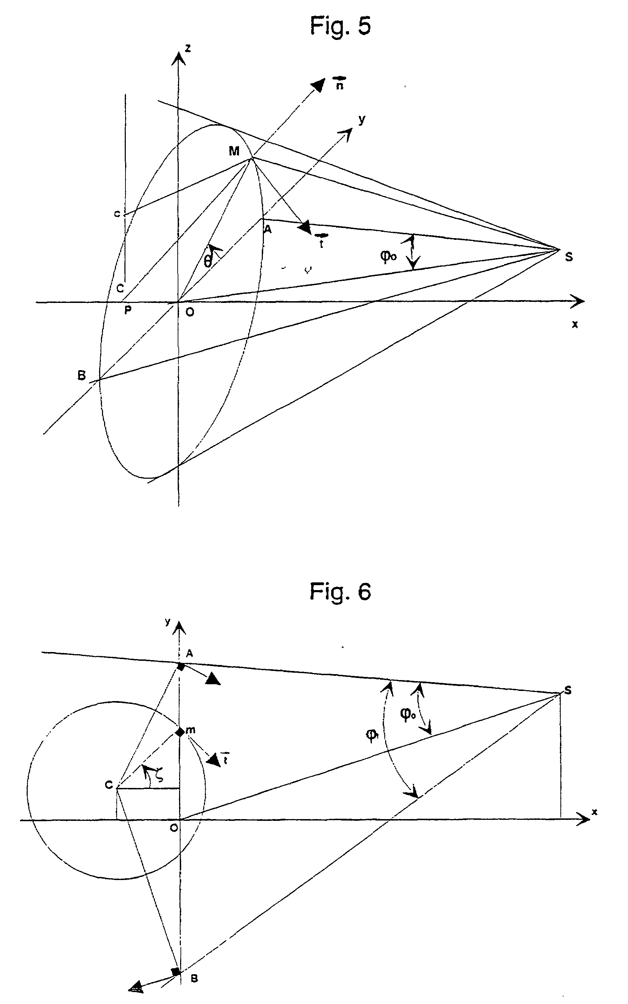

le cercle de centre O, de rayon R. d'axe Ox,
un point S, sommet du cône, n'appartenant ni à Ox ni au plan du cercle,
le plan défini par Ox et S, déterminant le diamètre AB du cercle de base,
l'axe Oy porté par OA,
l'axe Oz terminant le trièdre trirectangle direct Oxyz,
$\varphi_0$ l'angle SO. SA ; $\varphi_t$ l'angle SB,SA.
Le point courant M du cercle déterminé par son angle polaire $\theta$ = AOM,
l'axe de rotation Cc parallèle à Oz, C dans te plan xOy, c projection de M sur cet axe.
Ces éléments sont figurés FIG.5,

les coordonnées de M sont :

$$X = O$$

$$Y = R.\cos\theta$$

$$Z = R.\sin\theta$$

Dans le mouvement de rotation, le point M de l'obturateur décrit un cercle de centre c et de rayon cM.

La tangente $\vec{t}$ au cercle trajectoire du point M est contenue dans le plan horizontal (parallèle à xOy et orthogonal à Cc) passant par M ; elle est de plus perpendiculaire à cM.

La normale $\vec{n}$ au point correspondant du siège est la normale au plan tangent au cône qui contient la génératrice SM et la droite du plan yOz tangente en M au cercle de base.

Cosinus directeurs de $\vec{t}$

Soit m la projection de M sur xOy.

La trajectoire de M se projette sur xOy suivant le cercle (Cm) trajectoire de m.

La FIG.6 représente cette projection.

Soient Xc et Yc les coordonnées du point C.

Le point m a pour coordonnées X et Y.

Soit $\zeta$ = (Cx, Cm)

les cosinus directeurs de la tangente en m (et donc de $\vec{t}$, équipolent à cette tangente) s'écrivent :

$$Xt = \sin \zeta$$

$$Yt = -\cos \zeta$$

$$Zt = O$$

avec :

$$\sin \zeta = \frac{Y-Yc}{\sqrt{Xc^2+(Y-Yc)^2}}$$

$$\cos \zeta = \frac{-Xc}{\sqrt{Xc^2+(Y-Yc)^2}}$$

d'où

$$Xt = \frac{Y-Yc}{\sqrt{Xc^2+(Y-Yc)^2}}$$

$$Yt = \frac{Xc}{\sqrt{Xc^2+(Y-Yc)^2}}$$

$$Zt = 0$$

Cosinus directeurs de $\vec{n}$ :

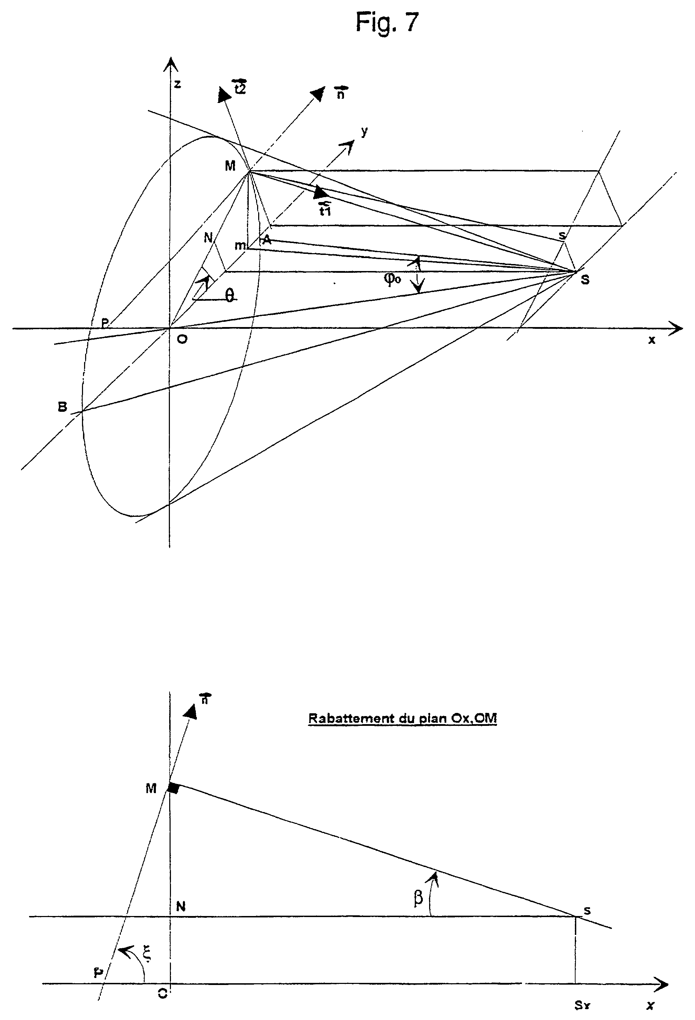

Considérons la FIG.7 sur laquelle on a fait figurer :

la projection s de S sur le plan (OM, Ox)
la projection N de s sur le plan (Oy, Oz)
la projection m de M sur le plan (Ox, Oy)
la tangente au cône $\vec{t}$ 1 portée par SM
la tangente au cône $\vec{t}$ 2 située dans le plan yOz du cercle de base et portée par la tangente au cercle dans ce plan
la normale au cône en M, $\vec{n}$, perpendiculaire aux deux normales ci-dessus
Les coordonnées de S :
$X_s$

$Y_s$

$Z_s = 0$

Les coordonnées de s sont :

$X_s$

$Y_s \cdot \cos^2 \theta$

$Y_s \cdot \sin \theta \cdot \cos \theta \, \vec{t} \, 2 \perp OM$

Ox est orthogonal à toutes les droites de yOz, donc à $\vec{t}\,2$

$\vec{t}\,2$ est donc perpendiculaire au plan (OM, Ox)

$\vec{n}$ , perpendiculaire à $\vec{t}\,2$, appartient donc à ce plan.

Soit P l'intersection de $\vec{n}$ et Ox

L'angle θ défini plus haut est aussi l'angle des deux plans xOy et (Ox, OM)

Soient β l'angle (Ms, Ox), ξ l'angle (Ox, MP).

Les cosinus directeurs de $\vec{n}$ s'écrivent :

$$X_n = \cos \xi$$

$$Y_n = \sin \xi \cdot \cos \theta$$

$$Z_n = \sin \xi \cdot \sin \theta$$

ξ et β étant complémentaires, $\sin \xi = \cos \beta$ et $\cos \xi = -\sin \beta$

$$\sin \xi = \cos \beta = \frac{Xs}{\sqrt{Xs^2 + (R - Ys.\cos \theta)^2}}$$

$$\cos \xi = -\sin \beta = \frac{R - Ys.\cos \theta}{\sqrt{Xs^2 + (R - Ys.\cos \theta)^2}}$$

Le produit scalaire des deux vecteurs unitaires $\vec{n}$ et $\vec{t}$ est égal au cosinus de l'angle qu'ils forment : et s'écrit

$$\vec{n}.\vec{t} = \cos \Delta$$

$$\vec{n}.\vec{t} = Xn.Xt + Yn.Yt + Zn.Zt$$

soit

$$\cos \Delta = \sin \zeta \cdot \cos \xi - \cos \zeta . \sin \xi . \cos \theta$$

on trouve en définitive :       avec

$$\delta = (\Delta - \frac{\pi}{2}). \ \sin \delta = - \frac{(R.\cos \theta - Yc)(R - Ys.\cos \theta) - Xc.Xs.\cos \theta}{\sqrt{Xc^2 + (R.\cos \theta - Yc)^2}. \sqrt{Xs^2 + (R - Ys.\cos \theta)^2}}$$

Dans le cas du cône droit qui nous intéresse, $Y_s = R$, et $tg \, \varphi_o = R/X_s$ et l'expression devient :

$$\sin \delta = \frac{Xc.\cos\theta-(R.\cos\theta-Yc)(1-\cos\theta).\tg\varphi_o}{\sqrt{Xc^2+(R.\cos\theta-Yc)^{2.}}\sqrt{1+(1-\cos\theta)^{2.}\tg^2\varphi_o}}$$

que l'on peut écrire, en utilisant les coordonnées réduites :

$$x = Xc/R \text{ et } y = Yc/R$$

$$\sin \delta = \frac{x.\cos\theta-(\cos\theta-y)(1-\cos\theta).\tg\varphi_o}{\sqrt{x^2+(\cos\theta-y)^{2.}}\sqrt{1+(1-\cos\theta)^{2.}\tg^2\varphi_o}}$$

La surface portante de contact d'étanchéité du siège et de l'obturateur est un tronc de cône limité par deux plans parallèles à la distance e de part et d'autre du cercle de base (C).

Cette surface est entièrement définie par la section du cône par les deux plans. Il suffit pour la générer de définir, pour toute position du point courant M, l'angle $\varphi$ de la génératrice SM et de l'axe du cône SO en fonction de l'angle polaire $\theta$ de M compté sur le cercle (C), ou de l'angle $\alpha$ des deux plans MOS et AOS.

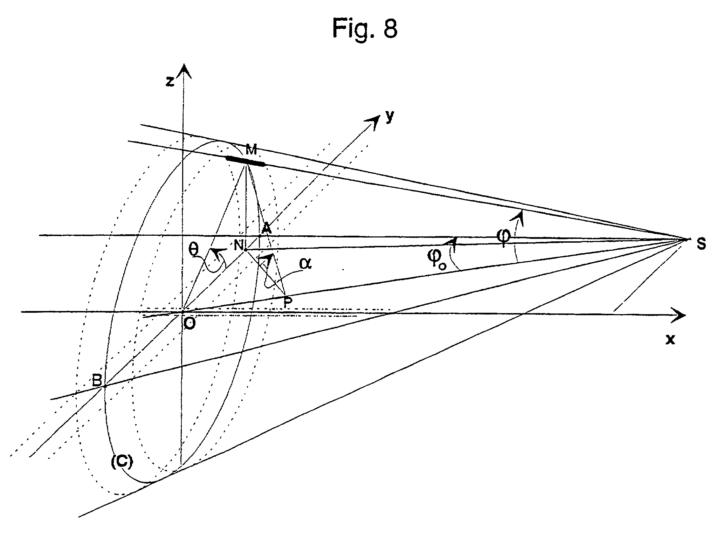

La FIG.8 précise ces points et indique en outre la projection N de M sur Oy et la projection P de M sur OS.

Les angles de la figure sont définis ci-dessous :

$$\theta = (OA, OM)$$

$$\alpha = (PN, PM)$$

$$\varphi = (SO, SM)$$

$$\varphi_o = (SO, SA)$$

$$\varphi_t = (SA, SB)$$

Le calcul sera effectué dans le cas du cône droit, pour lequel $Y_s = R$ et $SA \perp OA$

MN et MP étant orthogonaux à OS, NP l'est également.

Donc

$$(NO, NP) = \varphi_o$$

$$OP = ON . \sin \varphi_o$$

$$ON = R . \cos \theta$$

$$OP = R . \cos \theta . \sin \varphi_o$$

$$OS = R / \sin \varphi_o$$

$$NP = ON . \cos \varphi_o$$

$$NP = R. \cos \theta . \cos \varphi_o$$

$$PS = OS - OP$$

$$PS = R / \sin \varphi_o. R - \cos \theta . \sin \varphi_o$$

$$PS = R . (1 - \sin^2 \varphi_o . \cos\theta )/\sin \varphi_o$$

$$MP^2 = OM^2 - OP^2$$

$$MP^2 = R^2 . (1 - \sin^2 \varphi_o. \cos^2\theta)$$

$$tg \; \varphi = MP/SP$$

$$tg \; \varphi = \frac{\sqrt{1-\sin^2\varphi_o.\cos^2 \theta}}{1-\sin^2\varphi_o.\cos \theta} \; \sin \varphi_o$$

Il peut être plus intéressant d'exprimer $\varphi$ en fonction de $\alpha$, on écrit alors :

$$\cos \alpha = NP /MP$$

$$\cos \alpha = \frac{\cos \varphi_o. \cos \theta}{\sqrt{1-\sin^2 \varphi_o. \cos^2 \theta}}$$

soit :

$$\cos \theta = \frac{\cos \alpha}{\sqrt{\cos^2 \varphi_o + \sin^2 \varphi_o. \cos^2 \alpha}}$$

et enfin :

$$tg \; \varphi = \frac{\sin \varphi_o. \cos \varphi_o}{\sqrt{\cos^2 \varphi_o + \sin^2 \varphi_o. \cos^2 \alpha - \sin^2 \varphi_o. \cos \alpha}}$$

## Revendications

1.  Vanne rotative de réglage dont l'ensemble obturateur- siège en acier sans joint assure en position fermée une étanchéité parfaite du fluide entre l'amont et l'aval, le corps de vanne étant principalement constitué d'un corps (1), d'un axe rotatif (2), de deux paliers (3), d'un siège à portée d'étanchéité circulaire fixe en acier massif (4) et d'un obturateur à portée d'étanchéité circulaire en acier massif à double excentration ex1 et ex2 claveté sur l'axe rotatif (2) caractérisée en ce que les deux pièces mécaniques principales assurant l'étanchéité soit, l'obturateur (5), pièce mobile rotative et les siège (4), pièce fixe sur lequel l'obturateur prend appui à la fermeture ont une ligne d'étanchéité circulaire, cette ligne étant appelée cercle de base, la partie portante d'étanchéité de l'obturateur (5) et du siège (4) est géométriquement définie par un tronc de cône droit à base circulaire.

2. Vanne suivant la revendication 1 caractérisée en ce qu'à l'ouverture et à la fermeture de l'obturateur (5), l'angle de dégagement avec le siège (4) est supérieur à l'angle de coincement déterminé par la caractéristique des aciers de l'obturateur (5) et su siège (4).

3. Vanne suivant l'une quelconque des revendications précédentes caractérisée en ce que les surfaces de contact qui constituent la portée d'étanchéité sont des <u>cercles</u> absolument identiques, donc superposables entre l'obturateur (5) et le siège (4).

4. Vanne suivant l'une quelconque des revendications caractérisée en ce que la géométrie des surfaces de contact est ainsi définie qu'elle permet d'obtenir un angle de dégagement supérieur à l'angle de frottement.

**Patentansprüche**

1. Drehstellventil, bei dem die dichtungslose Verschluss-Sitz-Einheit aus Stahl in der Schließstellung eine einwandfreie Dichtheit gegenüber dem Medium zwischen Eingangsseite und Ausgangsseite gewährleistet, wobei der Ventilkörper im wesentlichen aus einem Körper (1), einer Drehachse (2), zwei Lagern (3), einem Sitz mit fester, kreisrunder Dichtfläche aus massivem Stahl (4) und einem an der Drehachse (2) festgelegten Verschluss mit kreisrunder Dichtfläche aus massivem Stahl mit zweifacher Mittenabweichung ex1 und ex2 besteht, dadurch gekennzeichnet, dass die beiden mechanischen Hauptteile, welche die Dichtheit gewährleisten, nämlich der Verschluss (5) als bewegliches Drehteil und der Sitz (4) als feststehendes Teil, an dem sich der Verschluss in Schließstellung abstützt, eine kreisförmige Dichtlinie bilden, die auch Grundkreis genannt wird, und der Dichtbereich von Verschluss (5) und Sitz (4) geometrisch durch einen geraden Kegelstumpf mit kreisrunder Grundfläche definiert ist.

2. Ventil nach Anspruch 1, dadurch gekennzeichnet, dass beim Öffnen und Schließen des Verschlusses (5) der Austrittswinkel zum Sitz (4) größer ist als der Klemmwinkel, der durch die Eigenschaften des jeweiligen Stahls von Verschluss (5) und Sitz (4) bestimmt ist.

3. Ventil nach einem der vorhergehenden Ansprüche, dadurch gekennzeichnet, dass die Kontaktflächen, welche die Dichtflächen bilden, völlig identische Kreise sind und somit zwischen Verschluss (5) und Sitz (4) aufeinanderlegbar sind.

4. Ventil nach einem der vorhergehenden Ansprüche, dadurch gekennzeichnet, dass die Geometrie der Kontaktflächen so bestimmt ist, dass sie einen Austrittswinkel ermöglicht, der größer ist als der Reibungswinkel.

**Claims**

1. Rotary adjuster valve whose steel plug-seat assembly with no separate seal assures when the valve is closed a perfect fluid seal between the upstream and downstream sides of the valve, the valve body principally comprising a body (1), a rotary shaft (2) two bearings (3), a solid steel fixed <u>circular sealing bearing surface</u> seat (4) and a solid steel <u>circular sealing bearing surface</u> plug with double offset (ex1) and (ex2) keyed to rotary shaft (2), characterized in that the main two mechanical parts assuring the seal, i.e. the plug (5), the rotary mobile part, and the seat (4), the fixed part on which the plug bears when the valve is closed, have a <u>circular</u> sealing line, that line being referred to as the base circle, the sealing bearing part of the plug (5) and of the seat (4) is geometrically defined by a frustum of truncated cone, having a circular basis.

2. Valve according to claim 1 characterized in that when the plug (5) is openned and closed the desengagement angle with the seat (4) is greater than the friction angle determined by the characteristic of the steels of the plug (5) and the seat (4).

3. Valve according to either preceding claim characterized in that the contact surfaces, which constitute the sealing bearing surface, are absolutely identical circles, and are therefore superposable between the plug (5) and the seat (4).

4. Valve according to any claim characterized in that the geometry of the contact surfaces is defined to obtain a desengagement angle greaterthan the friction angle.

Fig. 1

Fig . 2

S

S

C1

P1

Co

Po

C2

P2

A

O

8

Po

Co

Vue de dessus

C1 = Cercle

.o

Co = Cercle

o

C2 = Cercle

o

EP 0 993 571 B1

FIG.3

coupe:a a

# Fig. 4

Axe du
papillon. 2

## Fig. 5

## Fig. 6

# Fig. 7

Rabattement du plan Ox,OM

## Fig. 8